# EUROPEAN PATENT SPECIFICATION

(11) **EP 0 744 115 B1**
(45) Date of publication and mention of the grant of the patent: **02.04.2003**
(21) Application number: 95941690.0
(22) Date of filing: 07.12.1995
(51) Int. Cl.: H04Q 7/38

(54) **METHOD FOR DETERMINING HANDOVER IN A COMMUNICATIONS SYSTEM**
VERFAHREN ZUR BESTIMMUNG VON UBERGABE DER VERBINDUNG IN EINEM KOMMUNIKATIONS SYSTEM
PROCEDE DE DETERMINATION D'UN TRANSFERT DANS UN SYSTEME DE TELECOMMUNICATIONS

(30) Priority: 09.12.1994 GB 9424883
(43) Date of publication of application: 27.11.1996
(73) Proprietor: MOTOROLA INC., Schaumburg, Illinois 60196 (US)
(72) Inventor: THOMAS, Howard, Eldean, Swindon SN3 6BX (GB); JEANES, Tim, Palatine, IL 60067 (US); GILLILAND, Dennis, Wade, Naperville, IL 60542 (US)
(74) Representative: Hudson, Peter David
(86) International application number: EP9504816
(87) International publication number: WO96018276

(56) References cited:
- EP-A- 0 347 234
- WO-A-92/02104
- WO-A-95/07012

## Description

### Field of the Invention

This invention relates in general to communications systems, and more particularly to a method for determining handover in a communications system.

### Background to the Invention

A cellular mobile radio system comprises a number of cells, each having a base station supporting a plurality of communications channels any of which may carry a user's call. When the user moves out of the area covered by one cell the call is handed over to one of a number of neighbouring cells.

The capacity of a cell is determined by the number of channels available. To increase capacity, the cell areas may be reduced which increases the degree to which the set of available frequencies may be reused. Thus, in rural areas, where traffic density is low, cells tend to be large while, in urban areas traffic density tends to be larger requiring the use of smaller cells.

In high density traffic areas, one proposal for increasing capacity is to create a multi layer cell structure. This would consist of a layer of conventional cells, defined as "macrocells", with an underlay of smaller cells, defined as "microcells" with antennas situated below average roof top height, in a similar manner, a further layer of still smaller cells, defined as "picocells", with antennas situated within buildings can be envisaged. Thus, microcells might typically be 200 to 500m in extent along a street and a picocell might consist of a single floor within a building.

The process of handover can be separated into three phases. Firstly, identifying that a handover might be required, secondly, identifying a suitable handover candidate and finally, switching the mobile user from one base station to another.

There are a variety of methods by which handover process is currently initiated. Firstly, processes for initiating handover may make measurements of on the up link and down link between the mobile and the base station and initiate handover when received signal levels, received quality levels or timing advance values separately exceed thresholds. Secondly, processes for initiating handover may compare measurements of received signal strength with received quality to deduce that bad quality may be the result of interference. Thirdly, processes for initiating handover may additionally make measurements from a number of neighbour cells and initiate handover based on the relative level of the signal received from the serving cell and from the neighbour cells.

The situation of the antennas below roof top height in microcells, and within buildings in picocells, means that the local street geometry and building characteristics have a dominant effect on radio propagation. Consequently, the desired handover behaviour of a mobile will depend on the mobile's location within the cell hierarchy and the pattern of its movements in relation to the geometry of the streets and buildings which delimit the radio propagation path between the mobile and its serving base station.

For example, a mobile unit entering an intersection and turning a corner, or entering/exiting a building, can experience a substantial and rapid change in up link and down link received signal level necessitating a prompt handover. Conversely, a mobile which enters an intersection but continues travelling along the main axis of a microcell will experience a gradual change in its received signal level while its around-comer neighbour signal levels may experience a substantial rise for the period that the mobile is traversing the intersection. In the second case, a prompt handover would probably not be the best action to take.

In another scenario, a mobile might be very close to the base station of a cell in the macrocell layer such that a power budget handover might be expected to occur, whilst from a network capacity view point it might be better to keep the mobile on the microcell layer.

It is apparent, therefore, that in a hierarchical cellular radio system the desired handover behaviour to a given neighbour will depend on the position of that neighbour in the network hierarchy and on the geometry of streets and buildings delimiting boundary of the serving cell, the neighbour cell and the trajectory of the mobile. Thus, it is clear that it may be difficult the serving cell, the neighbour cell and the trajectory of the mobile. Thus, it is clear that it may be difficult for the base station to differentiate handover behaviour to different neighbours in such a manner on the basis of conventional treatment of the measurement data gathered for mobile assisted handover.

Document WO-A-92/02104 discloses a cellular radio system where a plurality of base stations provide radio coverage and including identification transmitters repeatedly transmitting identification signals. A mobile station can upon detection of said identification signal determine that it is within the coverage area of the identification transmitter.

It is desired to have a handover process which reflects the topology of the network hierarchy and the cell geometries in such a manner that handover behaviour to a given neighbour can be made dependent on the position of that neighbour in the network hierarchy and on the geometry of streets and buildings delimiting boundary of the serving cell, the neighbour cells and the trajectory of the mobile.

It would also be desirable to have neighboring cells classified according to serving cells. Thus each cell would have it its own classified list of neighboring cells according to the network hierarchy and/or other factors.

### Summary of the Invention

According to the present invention, there is provided a method for determining a handover in a communications system in accordance with claim 1.

According to a second aspect of the invention invention, there is provided an apparatus for determining a handover in a communications system in accordance with claim 5.

### Brief Description of the Drawing

FIG. 1 illustrates an area with different types of neighboring cell base stations.

FIG. 2 is a table for different types of neighboring cells and handover procedures.

FIG. 3 is a flow chart for an embodiment of the present invention.

### Detailed Description of the Preferred Embodiment

The present invention provides a method for determining a handover in a communications system having a serving cell and a plurality of neighboring cells including the steps of classifying relationships between the serving cell and the neighboring cells and determining a handover based on the classification. According to a preferred embodiment of the present invention such a handover process is structured to reflect topology of a cellular radio system.

Thus, the present invention relates to a handover method in a cellular radio system such that the structure of the handover process, by using information explicitly defining and classifying the inter-relationship between the cell providing service to a subscriber and the neighbour cells of that cell, reflects or has represented within it the topology of the system.

A handover detection process according to the present invention embodying such a structure will permit definition of unique algorithms or procedures for each of the different classifications of neighbour type. This approach, for example, would have particular benefits in a hierarchical cellular radio system as it would permit handovers between different layers in the network hierarchy to be differentiated from intra-layer handovers in a simple straight forward manner.

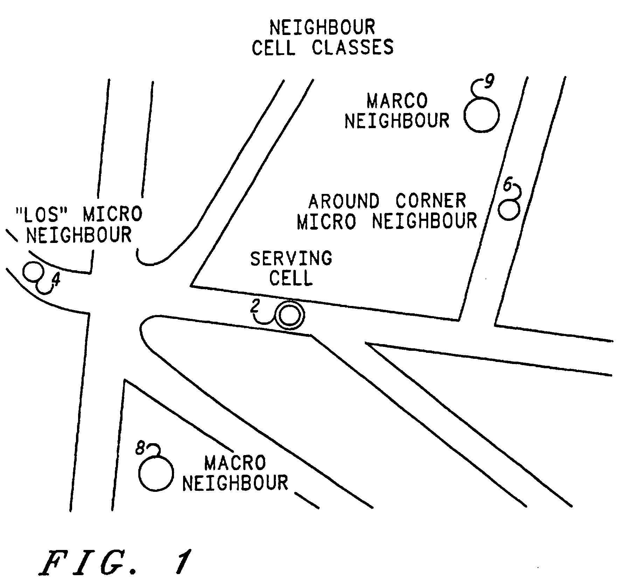

FIG. 1 illustrates several categories of neighbour cell types for the serving cell 2 that are described in the following paragraphs. A site along a main arterial route could be classified as line-of-sight cell 4. Even in the case when it is not truly line-of-sight the signal strength will be expected to fall gently since the road would not have right angles bends and there would be no major obstructions.

Another class of microcell neighbour is the around corner cell 6, in this case there is a right angle or other such corner which causes severe attenuation to the signal causing a drop of 20 to 40dB or so in a matter of a few tens of metres. A further class of neighbour in a two layer structure would be a macrocell 8, 9. Likewise if a mobile station is on the macro layer we can have unique behaviour to macrocell candidates and to microcell candidates.

Additionally, if a neighbour cell uses an adjacent frequency to that used by the serving cell then special handover behaviour would be desirable as a means to avoid interference or call loss. In GSM adjacent channels can produce considerable interference due to the spread of signal power from the adjacent channel into the desired channel. This means that a different and perhaps more precipitate handover mechanism is desirable because if the adjacent channel power is permitted to become 9dB threshold higher than the received power then it is highly probable that call will be lost. Thus, neighbours which are adjacent channel can also be ascribed a specific class.

Channel adjacency might be predicted by an accurate frequency plan. However, propagation models are often insufficient to predict all cases and handover behaviour to adjacent frequency neighbours must be identified during network optimisation and handover behaviour adjusted accordingly. If a handover detection process was structured according to this invention, adjustment to handover behaviour would simply require specifying a particular neighbour as adjacent channel and accordingly changing the procedure number or index for that neighbour.

The present invention may be implemented in various ways one of which will now be described by way of example.

There are four main categories of handover to be considered in a two layer macro/microcell network. These are: Macrocell to microcell, microcell to microcell, microcell to Macrocell, and Macrocell to Macrocell.

The task of the handover algorithm is to initiate handover at the correct time to the correct target cell such that objective of maximising capacity and quality of service are met as best they can.

Moreover, as radio propagation is delimited by the geometry of streets and buildings in a microcellular network, it is possible to add a further categorisation microcell to microcell handover category defined above based on the various scenarios which may be encountered. The rationale is to try to identify candidates which may be more or less suitable depending on the route which the mobile station takes. We approach this as follows:
a) microcell to microcell: handover between contiguous microcells along a street, that is, a handover to a so called line-of-sight (LOS) neighbour.
b) microcell to microcell: handover between contiguous microcells one on a street and one on an intersecting street, that is, a handover to a so called around-corner neighbour.

On this basis a serving microcell can have the following categories of neighbours:
1) Macrocell
2) microcell LOS
3) microcell around-corner

A macrocell, however, would not have to distinguish between microcells and could have the following categories of neighbours:
4) Macrocell
5) microcell

The preferred method of handover between neighbour cells within each layer of the hierarchical network shall be on the basis some process applied to the level of the serving cell and the neighbour cells, that is by some kind of power budget handover, whether of a conventional nature based on relative signal levels or some other kind based perhaps on absolute signal levels.

The present invention permits different algorithms and related parameters to be specified for each neighbour. This permits the likely causes for handover to different categories of neighbour cells to be optimised independently which, in principle, should permit parameterization and optimisation of the algorithm in the network to be more efficient. Handover decisions (i.e.. selection of best candidates) can be made relative to the categorisation of neighbour types and the condition which caused the handover.

The objective of microcell deployment in a two layer structure is capacity enhancement. This is best served by guiding as many mobile stations as possible to the underlay, subject to coverage and channel availability, and only directing unsuitable mobile stations to the overlay. Here, unsuitable refers to a "fast" moving mobile station which would generate too many handovers were it to be kept in the underlay.

Thus, taking each broad category of handovers in turn:
For microcell to microcell handovers, the aim is to promote handover to the best candidates, for instance, handovers to around-corner cells are suppressed if the mobile station does not turn a corner and are promoted if it is deemed that the mobile has turned a corner.

For microcell to macrocell handovers, the aim is to suppress these unless the mobile is deemed fast moving or there is a chance that a call will be lost and no suitable microcell candidate can be identified. For example, if the mobile station were to round a corner but find no suitable around-corner candidate, macrocells would be considered as default candidates.

For macrocell to microcell handovers, the aim is to promote handover subject to there being an available candidate cell and the mobile is deemed not to be "fast" moving.

Lastly, in terms of macrocell to macrocell handover, the aim is to default to this handover only if there is no available underlayer cell or the mobile is "fast" moving.

Taken together, the overall aim is to get mobile stations on the most appropriate layer, subject to coverage and availability, minimise lost calls, suppress handover to unsuitable candidates and suppress handover ping-pong, or suppress large numbers of handovers in a short amount of time.

The approach for implementing neighbour specific algorithms is to create a list of algorithms which are referred to by an index and then specify which index is to be used for each neighbour cell. This structure is flexible and provides a means for adding new algorithms should they be needed since no other elements of the code structure need be disturbed. A goal in specifying the procedures was to do so in a way which could make use of existing handover process structures to expedite the prototyping process.

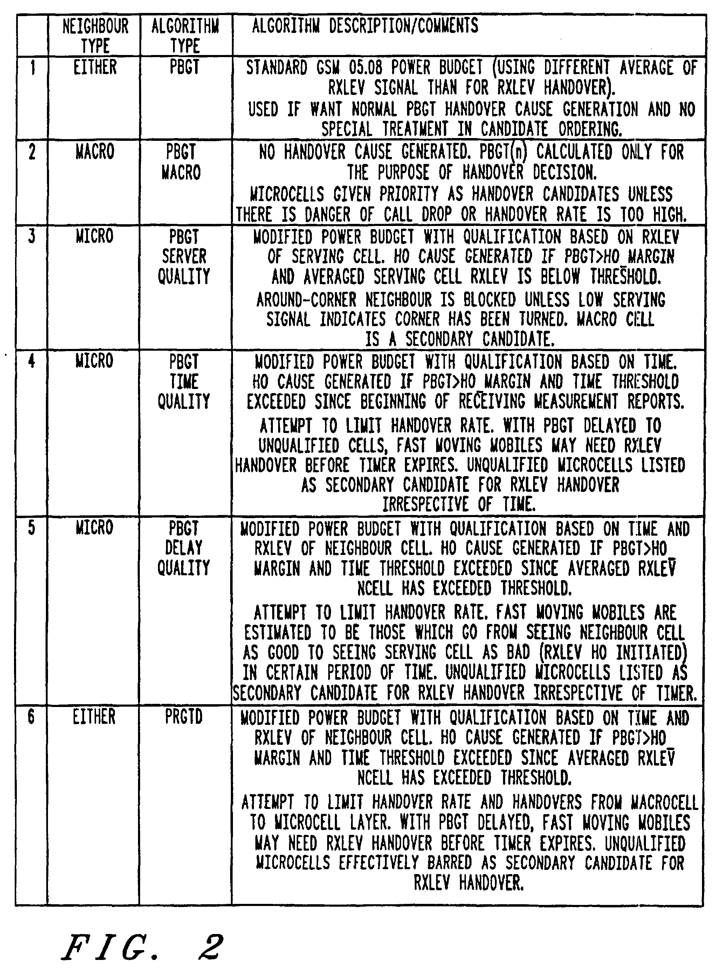

For example, an algorithm summary table may look like the one shown in FIG. 2 and contain the following information: Neighbour Type, Algorithm Type, Algorithm Description/Comments.

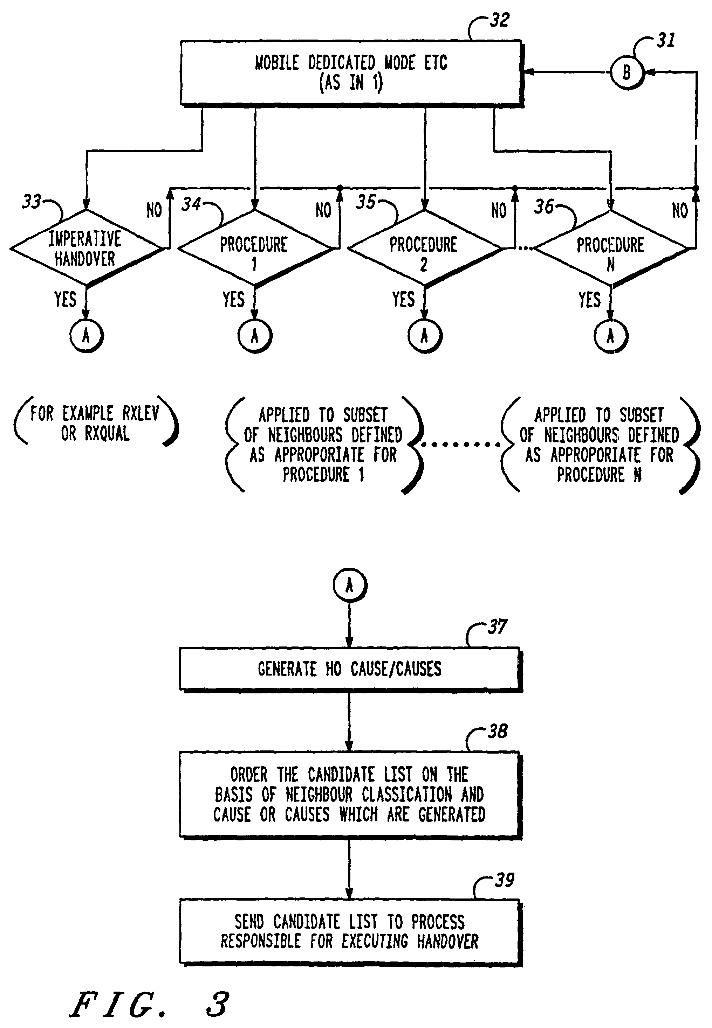

FIG. 3 is a flow chart of an embodiment according to the present invention. In step 32, the mobile station is in dedicated mode monitoring and reporting serving cell up link and down link signals as well as neighbouring cell signals. If according to any one of the procedures 33-36 a handover cause is recognised then a handover cause/causes are generated as in step 37, candidate list is ordered (step 38) on the basis of neighbour classification and cause/causes which were generated. Then the candidate list is sent to the process responsible for executing handover as in step 39. If not, the system returns to mobile dedicated mode as in step 31.

The present invention provides a handover method which structure reflects the topology of a hierarchical cellular radio network such that handover behaviour to neighbour cells is moderated by the relationship between the serving cell and any particular neighbour cell.

The present invention provides for classifying relationships between any serving cell and any of its neighbours based, for example, on their relative position in the network hierarchy, the respective geometrical relationship between the serving cell, neighbour cell and mobile trajectory or whether the neighbour cell uses an adjacent frequency to the serving cell. Handover behaviour is determined by the classification of a neighbour cell and measurement information gathered by the system for the purpose of determining handover.

In an alternative embodiment, the present invention provides for specifying a number of different handover algorithms or procedures which can selected for controlling handover to certain specified classes of neighbour cells.

In even a further embodiment, the present invention also provides for modifying the generation of the order of the list of handover candidates produced by the handover method on the basis of the neighbour cell which prompted a handover cause to be generated and the classification of that neighbour type. For example, if an around-corner neighbour prompted generation of a power budget handover, then that candidate should be the first candidate in the list and the second candidate might be an overlay cell.

## Claims

1. A method for determining a handover in a communications system having a serving cell (2) and a plurality of neighbouring cells (4,6,8,9), the method comprising the steps of:
classifying relationships between the serving cell and the neighbouring cells; **characterized by** further comprising the steps of
determining (37) the cause for handover; and
determining (38,39) a handover based on the classified relationship and cause for handover.

2. The method of any of the preceding claims further comprising the step of:
specifying a number of different handover procedures which can be selected from for controlling handover to a certain classification of neighbouring cells.

3. The method of any of the preceding claims wherein the step of classifying includes any one of the following a) relative position of cell in the network hierarchy, b) respective geometrical relationship between the serving cell, neighbour cell and mobile trajectory or, c) whether the neighbouring cell uses an adjacent frequency to the serving cell.

4. The method of any of the preceding claims wherein the step of classifying further comprises the step of:
generating database settings on the basis of neighbour classification.

5. An apparatus for determining a handover in a communications system having a serving cell (2) and a plurality of neighbouring cells (4,6,8,9), the apparatus comprising:
means for classifying relationships between the serving cell and the neighbouring cells;
and **characterized by** further comprising :
means for determining the cause for handover; and
means for determining a handover based on the classified relationship and cause for handover.

## Revendications

1. Procédé pour déterminer un transfert dans un système de communication ayant une cellule de service (2) et une pluralité de cellules voisines (4, 6, 8, 9) le procédé comprenant les étapes de :
classification des relations entre la cellule de service et les cellules voisines **caractérisé en ce qu'**il comprend en outre les étapes de :
détermination (37) de la cause pour le transfert ; et
détermination (38, 39) d'un transfert sur la base de la relation classifiée et de la cause pour le transfert.

2. Procédé selon une quelconque des revendications précédentes comprenant en outre les étapes de :
spécification d'un nombre de différentes procédures de transfert qui peuvent être sélectionnées pour commander un transfert pour une certaine classification des cellules voisines.

3. Procédé selon une quelconque des revendications précédentes dans lequel l'étape de classification comprend l'une de celles qui suivent : a) position relative de la cellule dans la hiérarchie de réseau, b) relation géométrique respective entre la cellule de service, la cellule voisine et la trajectoire de mobile ou, c) si la cellule voisine utilise une fréquence adjacente à la cellule de service.

4. Procédé selon une quelconque des revendications précédentes dans lequel l'étape de classification comprend en outre l'étape de :
génération des réglages de base de données sur la base de la classification voisine.

5. Appareil pour déterminer un transfert dans un système de communication ayant une cellule de service (2) et une pluralité de cellules voisines (4, 6, 8, 9), l'appareil comprenant :
un moyen pour classifier des relations entre la cellule de service et les cellules voisines ;
et **caractérisé en ce qu'**il comprend en outre :
un moyen pour déterminer la cause pour le transfert ; et
un moyen pour déterminer un transfert sur la base de la relation classifiée et la cause pour le transfert.

## Patentansprüche

1. Verfahren zur Bestimmung eines Handovers in einem Kommunikationssystem mit einer Arbeitszelle (2) und einer Mehrzahl von benachbarten Zellen (4, 6, 8, 9), wobei das Verfahren die Schritte umfasst:
Klassifizieren von Beziehungen zwischen der Arbeitszelle und den benachbarten Zellen, **dadurch gekennzeichnet, dass** weiter die folgenden Schritte umfasst sind:
Bestimmen (37) des Anlasses für einen Handover und
Bestimmen (38, 39) eines Handovers auf Grundlage der klassifizierten Beziehung und des Anlasses für den Handover.

2. Verfahren nach dem vorangehenden Anspruch, weiter umfassend den Schritt:
Spezifizieren einer Anzahl verschiedener Handover-Prozeduren, aus denen zur Steuerung des Handovers zu einer bestimmten Klassifikation von Nachbarzellen ausgewählt werden kann.

3. Verfahren nach einem der vorangehenden Ansprüche, wobei der Schritt des Klassifizierens irgendeinen der folgenden Punkte umfasst: a) relative Position der Zelle in der Netzwerk-Hierarchie, b) wechselseitige geometrische Beziehung zwischen der Arbeitszelle, der Nachbarzelle und der Trajektorie des Mobilgerätes oder c) ob die benachbarte Zelle eine benachbarte Frequenz der Arbeitszelle verwendet.

4. Verfahren nach einem der vorangehenden Ansprüche, wobei der Schritt des Klassifizierens weiter den Schritt umfasst:
Erzeugen von Datenbankeinstellungen auf Grundlage der Klassifikation der Nachbarn.

5. Vorrichtung zur Bestimmung eines Handovers in einem Kommunikationssystem mit einer Arbeitszelle (2) und einer Mehrzahl von benachbarten Zellen (4, 6, 8, 9), wobei die Vorrichtung umfasst:
Mittel zur Klassifizierung von Beziehungen zwischen der Arbeitszelle und den benachbarten Zellen, **dadurch gekennzeichnet, dass** weiter umfasst sind
Mittel zur Bestimmung des Anlasses für den Handover und
Mittel zur Bestimmung eines Handovers auf Basis der klassifizierten Beziehung und des Anlasses für den Handover.
